# EUROPEAN PATENT APPLICATION

(11) **EP 3 327 898 A1**
(43) Date of publication of application: **30.05.2018**
(21) Application number: 17203837.4
(22) Date of filing: 27.11.2017
(51) Int. Cl.: H02K 1/12

(54) **ROTARY COMPRESSOR SYSTEM, ROTARY COMPRESSOR, MOTOR, AND DESIGN METHOD**

(30) Priority: 29.11.2016 JP 2016230974
(71) Applicant: MITSUBISHI HEAVY INDUSTRIES THERMAL SYSTEMS, LTD., Tokyo 108-8215 (JP)
(72) Inventor: OGAWA, Makoto, TOKYO, 108-8215 (JP); SATO, Hajime, TOKYO, 108-8215 (JP); ESAKI, Ikuo, TOKYO, 108-8215 (JP); UNO, Masanari, TOKYO, 108-8215 (JP); SHIMAYA, Hirofumi, TOKYO, 108-8215 (JP); MIURA, Shigeki, TOKYO, 108-8215 (JP); SASAKI, Mikito, TOKYO, 108-8215 (JP); NII, Masahiro, TOKYO, 108-8215 (JP); SHIMIZU, Kenji, TOKYO, 108-8215 (JP)
(74) Representative: Cabinet Beau de Loménie

(57) **Abstract**

A rotary compressor for an air conditioner having a motor with a reduced thickness is provided. A rotary compressor system includes: a rotary compressor; and a sensorless vector control circuit configured to control a motor included in the rotary compressor; wherein a thickness of a stator in the motor is 20 mm or more and 70 mm or less. In the sensorless vector control circuit, angular velocity fluctuation of a piston rotor included in the rotary compressor is minimized using model reference adaptive system (MRAS) control.

## Description

### BACKGROUND OF THE INVENTION

### Field of the Invention

The present invention relates to a rotary compressor system, a rotary compressor, a motor, and a design method.

Priority is claimed on Japanese Patent Application No. 2016-230974, filed November 29, 2016, the content of which is incorporated herein by reference.

### Description of Related Art

In response to a demand for energy saving in recent years, an annual performance factor (APF) has also been emphasized in a compressor for an air conditioner. Generally, the efficiencies of compressors are lowered in a low-speed operation in many cases and the efficiency improvement in a low-speed range also greatly contributes to the improvement of an APF. Furthermore, there is a demand for a reduction in manufacturing costs in addition to a demand for energy saving. In response to the demand for reduction in manufacturing costs, for example, reduction of thicknesses of motors included in compressors is considered in some cases.

Note that Patent Document 1 discloses a compressor used for an air conditioner, wherein an amount of heat transferred from a stator of a motor included in the compressor to surrounding air through a sealed container is reduced by reducing a contact area between the stator and the sealed container, and the amount of heat is used for heating a refrigerant. Patent Document 1 discloses a technique of stacking about 100 to 200 electromagnetic steel sheets with a thickness of 0.2 mm to 0.4 mm in association with production of a stator.

### [Patent Document]

[Patent Document 1] Japanese Unexamined Patent Application, First Publication No. 2008-101558

### SUMMARY OF THE INVENTION

However, when a thickness (thickness of stator lamination) of a motor included in a compressor is reduced, inertia in a shaft rotational direction is correspondingly reduced. Thus, a variation in gas compression torque in a cylinder causes fluctuations in angular velocity and efficiency of the motor is reduced. Such a reduction in motor efficiency is particularly noticeable in a low-speed range. Therefore, in order to improve such motor efficiency, it is necessary to secure a thickness of a motor to a certain extent and thus it is difficult to reduce the manufacturing costs by reducing the thickness of the motor.

Therefore, an objective of the present invention is to provide a rotary compressor system, a rotary compressor, a motor, and a design method capable of solving the above-described problems.

A first aspect of the present invention is a rotary compressor system, including: a rotary compressor; and a sensorless vector control circuit configured to control a motor included in the rotary compressor, wherein a thickness of a stator in the motor is 20 mm or more and 70 mm or less.

In the rotary compressor system according to a second aspect of the present invention, the thickness of the stator in the motor is 20 mm or more and 60 mm or less.

In the rotary compressor system according to a third aspect of the present invention, the thickness of the stator in the motor is 20 mm or more and 50 mm or less.

In the rotary compressor system according to a fourth aspect of the present invention, an outer diameter of the stator in the motor may be 100 mm or more and 125 mm or less.

A fifth aspect of the present invention is a rotary compressor for an air conditioner including a motor controlled by sensorless vector control: wherein a thickness of a stator in the motor is 20 mm or more and 70 mm or less.

A sixth aspect of the present invention is a motor mounted in a rotary compressor for an air conditioner and controlled by sensorless vector control, wherein a thickness of a stator in the motor is 20 mm or more and 70 mm or less.

A seventh aspect of the present invention is a design method of setting a threshold value of motor efficiency of a motor mounted in a rotary compressor for an air conditioner and controlled by sensorless vector control in a low-speed range; selecting a test motor in which the threshold value is able to be achieved and a thickness is the smallest among a plurality of test motors having different thicknesses; and setting a thickness of the selected test motor as a thickness of the motor.

According to the present invention, it is possible to reduce a thickness of a motor of a compressor and reduce the manufacturing costs.

### BRIEF DESCRIPTION OF THE DRAWINGS

FIG. 1 is a vertical cross-sectional view of a rotary compressor according to an embodiment of the present invention.
FIG. 2 is a first diagram showing a control circuit of the rotary compressor according to the embodiment of the present invention.
FIG. 3 is a second diagram showing a control circuit of the rotary compressor according to the embodiment of the present invention.
FIG. 4 is a diagram illustrating a relationship between the number of revolutions and motor efficiency in a motor according to the embodiment of the present invention.
FIG. 5 is a flowchart illustrating an example of a design method of a stator thickness according to the embodiment of the present invention.

### DETAILED DESCRIPTION OF THE INVENTION

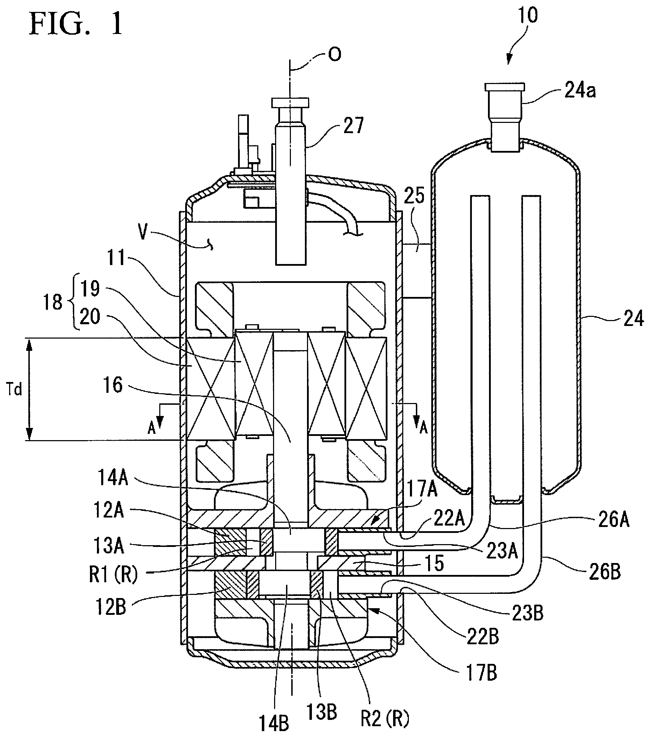

A rotary compressor system according to embodiments of the present invention will be described below with reference to FIGS. 1 to 5.

FIG. 1 is a side cross-sectional view of a rotary compressor according to a first embodiment of the present invention.

As shown in FIG. 1, a compressor 10 according to the embodiment includes a motor 18, a crankshaft 16 rotating along with the motor 18, piston rotors 13A and 13B eccentrically rotating along with the rotation of the crankshaft 16, cylinders 12A and 12B having compression chambers for accommodating the piston rotors 13A and 13B formed therein, and a housing 11 forming a discharge space V through which a compressed refrigerant is discharged and surrounding the cylinders 12A and 12B.

The compressor 10 is a so-called two-cylinder type rotary compressor in which the disk-shaped cylinders 12A and 12B are provided in two upper and lower stages in the cylindrical housing 11. The cylindrical piston rotors 13A and 13B having external forms smaller than inner sides of inner wall surfaces of the cylinders are arranged in the cylinders 12A and 12B. The piston rotors 13A and 13B are inserted and fixed into eccentric shaft parts 14A and 14B of a rotational axis along a central axis of the housing 11.

The upper-cylinder-side piston rotors 13A and the lower-cylinder-side piston rotor 13B are provided such that their phases differ from each other by 180°.

Also, a disk-shaped partition plate 15 is provided between the upper and lower cylinders 12A and 12B. A space R in the upper-side cylinder 12A and a lower space R are partitioned into compression chambers R1 and R2 by the partition plate 15 without communicating with each other.

The crankshaft 16 is supported to be rotatable about an axis O by an upper bearing part 17A fixed to the cylinder 12A and a lower bearing part 17B fixed to the cylinder 12B.

The crankshaft 16 has the eccentric shaft parts 14A and 14B offset in a direction perpendicular to a central line of the crankshaft 16. The eccentric shaft parts 14A and 14B are pivoted about a central axis of the crankshaft 16 so that the upper and lower piston rotors 13A and 13B rotate eccentrically in the cylinder 12A and 12B following such pivoting.

The crankshaft 16 protrudes upward (that is, in a direction in which the motor 18 is located when viewed from the compressor 10) from the upper bearing part 17A. A motor rotor 19 of the motor 18 configured to rotatably drive the crankshaft 16 is integrally provided on one end portion of the crankshaft 16 in an axis O direction. A stator 20 is fixed and provided on an inner circumferential surface of the housing 11 to face an outer circumferential portion of the motor rotor 19.

In the compressor 10, an accumulator 24 configured to perform gas-liquid separation on a refrigerant before supplying the refrigerant to the compressor 10 is fixed to the housing 11 via a stay 25. Intake pipes 26A and 26B configured to suction a refrigerant in the accumulator 24 into the compressor 10 are provided in the accumulator 24. Distal end portions of the intake pipes 26A and 26B are connected to suction ports 23A and 23B through openings 22A and 22B.

The compressor 10 takes the refrigerant from a suction port 24a of the accumulator 24 into the accumulator 24. To be specific, the compressor 10 performs gas-liquid separation on the refrigerant in the accumulator 24, and supplies the gas phase from the intake pipes 26A and 26B to the compression chambers R1 and R2 serving as internal spaces of the cylinder 12A and 12B via the suction ports 23A and 23B of the cylinder 12A and 12B.

Moreover, the piston rotors 13A and 13B eccentrically rotate so that the volumes of the compression chambers R1 and R2 gradually decrease and thus the refrigerant is compressed. The refrigerant passes around the motor 18 and is then discharged to a pipe 27 constituting a refrigeration cycle via a discharge port provided at an upper part.

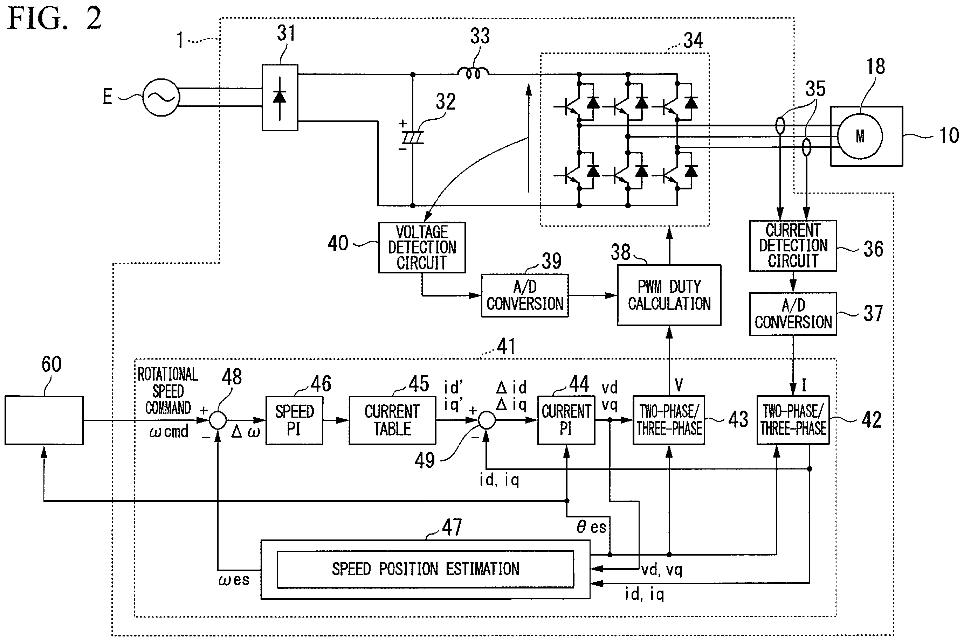

FIG. 2 is a first diagram showing a control circuit of the rotary compressor according to the embodiment of the present invention.

FIG. 2 illustrates a block diagram of a sensorless vector control circuit 1 configured to control the motor 18. The sensorless vector control circuit 1 shown in FIG. 2 includes a converter 31, a capacitor 32, a reactor 33, an inverter 34, a current sensor 35, a current detection circuit 36, an analog/digital (A/D) conversion circuit 37, a pulse width modulation (PWM) duty calculation circuit 38, an A/D conversion circuit 39, a voltage detection circuit 40, and a full vector control circuit 41. Furthermore, the full vector control circuit 41 includes a two-phase/three-phase conversion circuit 42, a two-phase/three-phase conversion circuit 43, a current PI control circuit 44, a current conversion table 45, a speed PI control circuit 46, a speed position estimation circuit 47, a subtractor 48, and a subtractor 49.

Note that a rotary compressor system includes a rotational speed control device 60, the sensorless vector control circuit 1, and a rotary compressor 10.

The converter 31 rectifies a three-phase alternating current (AC) input from a power system E. The capacitor 32 and the reactor 33 smooth the rectified voltage and generate a direct current (DC) voltage. The inverter 34 generates a three-phase drive voltage from the DC input voltage on the basis of a duty command value output by the PWM duty calculation circuit 38 and supplies a drive voltage to the motor 18 included in the compressor 10. Thus, the sensorless vector control circuit 1 drives the motor 18.

The current detection circuit 36 detects a current flowing through the motor 18 and outputs the detected current to the A/D conversion circuit 37. The A/D conversion circuit 37 converts the current detected by the current detection circuit 36 into a digital signal and outputs the converted signal to the full vector control circuit 41. In the full vector control circuit 41, the two-phase/three-phase conversion circuit 42 performs coordinate conversion (dq conversion) on a three-phase signal input from the A/D conversion circuit 37 and outputs the converted current values id and iq to the speed position estimation circuit 47. The two-phase/three-phase conversion circuit 42 refers to a previous estimation value θes of a magnetic pole angle by the motor rotor 19, which will be described below. The speed position estimation circuit 47 receives current values id and iq and electric power command values vd and vq in a dq coordinate system output by the current PI control circuit 44 as inputs and calculates an estimation value ωes of a rotational speed of the motor 18 and an estimation value θes of a magnetic pole angle (an angle of a magnetic pole position) of the motor rotor 19 using, for example, a method called a model reference adaptive system (MRAS).

The rotational speed control device 60 outputs a command value ωcmd of a rotational speed to a full vector control circuit 41. The subtractor 48 calculates a deviation Δω between a command value ωcmd of a rotational speed by a rotational speed control device 60 and an estimation value ωes of a rotational speed estimated by the speed position estimation circuit 47 and outputs the calculated deviation to the speed PI control circuit 46. The speed PI control circuit 46 calculates a torque command value for reducing the deviation (to 0) by PI control on the basis of Δω. The full vector control circuit 41 converts the torque command value into current command values id' and iq' on the basis of the current conversion table 45. The subtractor 49 calculates deviations Δid and Δiq between the current command values id' and iq' and id and iq output by the two-phase/three-phase conversion circuit 42 and outputs the calculated deviations to the current PI control circuit 44. The current PI control circuit 44 calculates voltage command values vd and vq for reducing the deviations by the PI control on the basis of the deviations Δid and Δiq. The current PI control circuit 44 outputs the voltage command values vd and vq to the two-phase/three-phase conversion circuit 43. The two-phase/three-phase conversion circuit 43 performs coordinate conversion of the voltage command values vd and vq from two phases to three phases by referring to the estimation value θes of the magnetic pole angle of the motor rotor 19 estimated by the speed position estimation circuit 47 and outputs the converted voltage command value V to the PWM duty calculation circuit 38. The PWM duty calculation circuit 38 receives the voltage command value V and a signal obtained by digitally converting the DC input voltage to the inverter 34 detected by the voltage detection circuit 40 using the A/D conversion circuit 39 as inputs and calculates a duty command value. The PWM duty calculation circuit 38 outputs the calculated duty command value to the inverter 34.

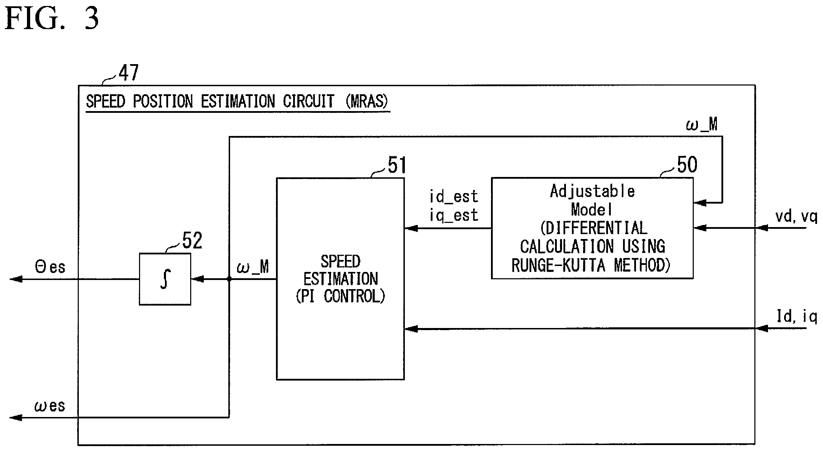

FIG. 3 is a second diagram showing the control circuit of the rotary compressor according to the embodiment of the present invention.

FIG. 3 illustrates a block diagram of the speed position estimation circuit 47. The speed position estimation circuit 47 includes a current-estimating circuit 50, a speed-estimating circuit 51, and an integrating circuit 52. The current-estimating circuit 50 receives the electric power command values vd and vq and an estimation value ω_M of the rotational speed of the motor rotor 19 estimated by the speed-estimating circuit 51 as inputs and estimates current estimation values id_est and iq_est on the basis of an adaptive model (an adjustable model) obtained by modeling the motor 18. The speed-estimating circuit 51 receives the current estimation values id_est and iq_est and id and iq as inputs and estimates a rotational speed (ω_M). The integrating circuit 52 integrates the estimation value ω_M of the rotational speed and calculates an estimation value θes of the magnetic pole angle of the motor rotor 19. The speed position estimation circuit 47 uses the estimation value ω_M of the rotational speed estimated by the speed-estimating circuit 51 as the estimation value ωes of the rotational speed and outputs the estimation value ω_M together with the estimation value θes of the magnetic pole angle of the motor rotor 19 calculated by the integrating circuit 52.

Since the inside of the compressor 10 becomes a high-temperature and high-pressure environment, it is difficult to provide a sensor configured to detect a position of the piston rotor 13. According to sensorless vector control (for example, MRAS control) using the control circuit shown in FIGS. 2 and 3, the rotational speed or the magnetic pole angle of the motor rotor 19 can be detected with high accuracy without using a sensor. Furthermore, since the motor rotor 19, the crankshaft 16, and the piston rotors 13A and 13B are integrally constituted and rotate, it is thought that a magnetic pole angle of the motor rotor 19 and positions of the piston rotors 13A and 13B are in a certain positional relationship. For this reason, the positions of the piston rotors 13A and 13B are estimated and controlled with high accuracy using the MRAS control and fine torque control is performed to correspond to the fluctuation of the gas compression torque so that a variation in an angular velocity of the crankshaft 16 can be minimized. Generally, since the rotary compressor receives a force from a high-pressure refrigerant gas as the compression of the refrigerant gas in the cylinders 12A and 12B progresses, the gas compression torque largely fluctuates during one compression process. With that influence, a variation occurs in the angular velocity of the crankshaft 16 during the compression process. However, when the MRAS control according to the embodiment is introduced, the rotational speed control device 60 calculates a command value of the rotational speed to minimize variations appearing in estimation values for a rotational speed or a magnetic pole angle of the motor rotor 19 so that the angular velocity variation of the crankshaft 16 can be minimized.

When countermeasures against a gas compression torque fluctuation during the compression process are considered from another point of view, in the motor control in the related art (for example, V/f control), it is necessary to gain inertia by designing a size of the motor rotor 19 to have a large size so as to reduce the influence of the gas compression torque fluctuation. A thickness Td (FIG. 1) of the stator 20 in a rotor axial direction is also designed to be somewhat large in accordance with a size of the motor rotor 19. The stator 20 is constituted of a stator iron core (not shown) arranged in a circumferential direction of the motor rotor 19, a stator winding (not shown) wound around the stator iron core, and the like. The stator iron core is constituted by stacking thin steel plates. The thickness Td of the stator 20 can be reduced, for example, by reducing the number of stacked steel plates; however, a reduction of the thickness Td is not easy to achieve due to the restrictions on securing inertia. However, since the rotational speed of the motor rotor 19 can be kept constant by introducing the MRAS control, the thickness Td of the stator 20 can be reduced without considering the above restrictions. The manufacturing costs can be reduced by reducing the thickness Td of the stator 20.

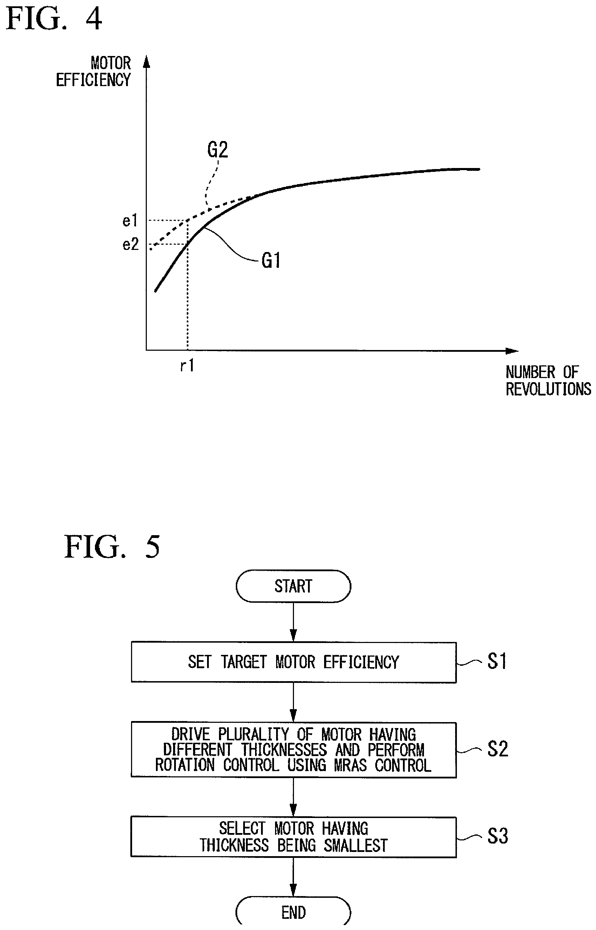

FIG. 4 is a diagram illustrating a relationship between the number of revolutions and motor efficiency in the motor according to the embodiment of the present invention.

In graphs of FIG. 4, a vertical axis indicates motor efficiency and a horizontal axis indicates the number of revolutions of a motor. Graphs G1 and G2 are graphs qualitatively showing relationships between motor efficiencies and the numbers of revolutions. The graph G1 indicates a relationship between motor efficiency and the number of revolutions when a motor with a small thickness Td is driven, for example, using a conventional motor control method (for example, V/f control). As indicated by the graph G1, in the motor with the small thickness Td (a motor with a small inertia), the motor efficiency is greatly lowered in a low-speed range. The graph G2 indicates a relationship between motor efficiency and the number of revolutions when a motor with a large thickness Td is driven, for example, using a conventional motor control method (for example, V/f control). As indicated by the graph G2, in the motor with the large thickness Td (a motor with large inertia), a decrease in motor efficiency is relatively gentle in a low-speed range. As described above, when conventional motor control is used, for example, the motor efficiency as indicated by the graph G2 is realized by setting the thickness Td to be somewhat large.

Next, a case in which the motor 18 is controlled using sensorless vector control including the estimation of a magnetic pole angle using the MRAS control according to the embodiment will be considered. When the sensorless vector control is used, the motor can efficiently rotate even in a low-speed range. Furthermore, when the sensorless vector control is used, the motor can be rotated at a constant speed by performing fine torque control to correspond to the load fluctuation. Therefore, if the sensorless vector control is used, the same motor efficiency as shown in the graph G2 can be realized without lowering the motor efficiency in the low-speed range even when the motor 18 has the reduced thickness Td.

Next, an example in which the thickness of the stator 20 is reduced will be described. The inventors attempted to reduce the thickness Td by introducing sensorless vector control in the motor 18 having the outer diameter of the stator 20 of 105 mm. When sensorless vector control is not performed, it is necessary to increase the thickness Td and gain inertia as described above. The thickness Td of the motor designed under the condition that the motor efficiency equal to or higher than a predetermined threshold value is achieved by the conventional motor control is 75 mm. With regard to a threshold value of the motor efficiency, for example, in FIG. 4, motor efficiency e1 at the number of revolutions r1 can be determined as a threshold value. With regard to such a threshold value, when sensorless vector control is introduced, for example, similar motor efficiency can be achieved with the motor 18 designed with a thickness Td of 55 mm. Furthermore, when a higher threshold value for the motor efficiency is set, such a threshold value can be achieved with the motor 18 designed with a thickness Td of 65 mm.

The inventors attempted to reduce magnitudes of outer diameters of motor rotors 19 using two types of motors 18 having stators 20 with outer diameters of 105 mm and 125 mm on the premise that control is performed so that rotational speeds become constant against fluctuations in gas compression torque by performing sensorless vector control. As a result, the outer diameters of the motor rotors 19 of both types of motors 18 could also be reduced from 54.8 mm to 46.8 mm. In the case of the inertia of the motor rotors 19 before and after the sizes thereof were reduced, the inertia in the related art (an outer diameter of 54.8 mm) was 4.92×10⁵ (g·mm²) and the inertia after reducing the size was 2.77×10⁵ (g·mm²). In other words, the inertia after the size was reduced could be made about 0.563 (= 2.77×10⁵/4.92×10⁵) times the inertia before the size was reduced. When reduction of the inertia is realized by reducing the total thickness while maintaining sizes of the outer diameters of the motor rotors 19, it is thought that the magnitude of the thickness Td can be reduced to about 42 mm based on 75 mm×0.563 = 42.225 mm.

Values such as the values of the thickness Td, i.e., 55 mm, 65 mm, and 42 mm, are values based on the premise that the motor efficiency is kept at a predetermined threshold value or more. For example, when motor efficiency e2 at the number of revolutions r1 in FIG. 4 is determined as a threshold value, the values of the thickness Td can also be further reduced. In the case of being actually mounted in an air conditioning rotary compressor, it is thought that meaningful performance can be achieved in calculations even when the thickness Td is reduced to about 20 mm.

Therefore, when the motor 18 is controlled through sensorless vector control using the MRAS control, it is possible to control the number of revolutions of the motor 18 while coping with the gas compression torque fluctuation during the compression process and to operate the compressor 10 while maintaining the performance thereof even when each of the values of the thickness Td of the stators 20 is designed to be 20 mm or more to 70 mm or less. Furthermore, the manufacturing costs can be reduced by reducing the thickness Td of the stator 20.

Note that, when a threshold value of motor efficiency is set to be high, it is necessary to set the inertia of the motor rotor 19 to have a large size to a certain extent even when sensorless vector control is used and it is accordingly necessary to increase a size of the thickness Td of the stator 20 to have a large size to a certain extent. In that case, a thickness size of 75 mm in the case of conventional control (V/f control) can be reduced to, for example, about 40 mm or more and 65 mm or less and thus the manufacturing costs can be reduced.

Next, a design method of a thickness of the stator 20 will be described with reference to FIG. 5

FIG. 5 is a flowchart illustrating an example of a design method of a stator thickness according to the embodiment of the present invention.

In the design method, a value which is as low as possible while maintaining the motor efficiency in a low-speed range to be a predetermined threshold value or more is set as the thickness Td of the stator 20 of the motor 18 mounted in the rotary compressor 10 for the air conditioner and controlled through sensorless vector control using MRAS control.

First, target motor efficiency of the predetermined number of revolutions of the motor in a low-speed range is set (Step S1). Subsequently, a plurality of motors having thicknesses Td of stators with different values are driven by applying a predetermined load thereto and rotation control thereof is performed by sensorless vector control using MRAS control (Step S2). For example, test motors having thicknesses Td of 75 mm, 65 mm, 55 mm, 45 mm, 35 mm, and 25 mm and designed such that another size (a stator outer diameter or the like) is designed the same value are prepared, and the motors are driven while changing the numbers of revolutions of the motors in ranges including the numbers of revolutions in a low-speed range corresponding to a threshold value determined in Step S1 using the sensorless vector control circuit 1. Subsequently, a motor in which target motor efficiency is achieved and a thickness is the smallest is selected among the motors driven in Step S2 (Step S3). An accumulated pressure of the selected motor is determined as a design value. Thus, the thickness Td is designed.

According to the embodiment, since a variation in rotational speed can be minimized using the MRAS control, the thickness Td of the stator 20 can be reduced without degrading the performance of the compressor 10. Thus, space-saving can be realized due to the miniaturization of the motor 18, and the reduction in manufacturing costs can be realized.

Note that various motors such as a permanent magnet synchronous motor and an induction motor can be applied as the motor 18.

Although an example in which the stator outer diameter is 105 mm and an example in which the stator outer diameter is 125 mm have been described in the above-described embodiment, the present invention is not limited thereto. For example, thicknesses Td of a motor having a stator outer diameter of about 100 mm to 112 mm, a motor having a stator outer diameter of about 125 mm to 135 mm, a motor having a stator outer diameter of about 90 mm, and a motor having a stator outer diameter of about 170 mm can be similarly reduced.

In addition, the constituent elements in the above-described embodiment can be appropriately replaced with well-known constituent elements without departing from the gist of the present invention. Furthermore, the technical scope of the present invention is not limited to the above-described embodiment and various modifications can be performed without departing from the gist of the present invention. Note that the rotary compressor system includes the rotational speed control device 60, the sensorless vector control circuit 1, and the rotary compressor 10. The rotary compressor system according to the embodiment is used for an air conditioner.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

### EXPLANATION OF REFERENCES

1 Sensorless vector control circuit
10 Compressor
11 Housing
12A, 12B Cylinder
13A, 13B Piston rotor
16 Crankshaft
18 Motor
19, 19' Motor rotor
20, 20' Stator
22A, 22B Opening
23A, 23B Suction port
24 Accumulator
25 Stay
26A, 26B Intake pipe
31 Converter
32 Capacitor
33 Reactor
34 Inverter
35 Current sensor
36 Current detection circuit
37 A/D conversion circuit
38 PWM duty calculation circuit
39 A/D conversion circuit
40 Voltage detection circuit
41 Full vector control circuit
42, 43 Two-phase/three-phase conversion circuit
44 Current PI control circuit
45 Current conversion table
46 Speed PI control circuit
47 Speed position estimation circuit
48 Subtractor
49 Subtractor
50 Current-estimating circuit
51 Speed-estimating circuit
52 Integrating circuit

## Claims

1. A rotary compressor system, comprising:
a rotary compressor (10); and
a sensorless vector control circuit (1) configured to control a motor (18) included in the rotary compressor,
wherein a thickness of a stator (20) in the motor is 20 mm or more and 70 mm or less.

2. The rotary compressor system according to Claim 1, wherein the thickness of the stator in the motor is 20 mm or more and 60 mm or less.

3. The rotary compressor system according to Claim 1, wherein the thickness of the stator in the motor is 20 mm or more and 50 mm or less.

4. The rotary compressor system according to any one of Claims 1 to 3, wherein an outer diameter of the stator in the motor is 100 mm or more and 125 mm or less.

5. A rotary compressor (1) for an air conditioner including a motor (18) controlled by sensorless vector control, wherein a thickness of a stator (20) in the motor is 20 mm or more and 70 mm or less.

6. A motor (18) mounted in a rotary compressor (1) for an air conditioner and controlled by sensorless vector control, wherein a thickness of a stator (20) in the motor is 20 mm or more and 70 mm or less.

7. A design method, comprising:
setting a threshold value of motor efficiency of a motor (18) mounted in a rotary compressor for an air conditioner and controlled by sensorless vector control in a low-speed range;
selecting a test motor in which the threshold value is able to be achieved and a thickness is the smallest among a plurality of test motors having different thicknesses; and
setting a thickness of the selected test motor as a thickness of the motor.
